# EUROPÄISCHE PATENTSCHRIFT

(11) **EP 1 052 756 B1**
(45) Veröffentlichungstag und Bekanntmachung des Hinweises auf die Patenterteilung: **02.01.2004**
(21) Anmeldenummer: 00109291.5
(22) Anmeldetag: 29.04.2000
(51) Int. Cl.: H02G 3/30

(54) **Konsole zur Befestigung von Leitungsführungskanälen**
Fixation bracket for line channels
Console de fixation pour canalisation de conduites

(30) Priorität: 14.05.1999 DE 29908606 U
(43) Veröffentlichungstag der Anmeldung: 15.11.2000
(73) Patentinhaber: Tehalit GmbH & Co. KG, 67716 Heltersberg (DE)
(72) Erfinder: Mayer, Hans, Techniker, 66851 Bann (DE)
(74) Vertreter: Patentanwälte Möll und Bitterich

(56) Entgegenhaltungen:
- EP-A- 0 555 806
- WO-A-89/12340

## Beschreibung

Die Erfindung betrifft Konsolen zur Befestigung von Leitungsführungskanälen an Wänden gemäß dem Oberbegriff des Anspruchs 1 (Siehe WO-A-8 912 340).

Sollen Leitungsführungskanäle an Wänden montiert werden und soll dabei zwischen-Wand und Kanal ein Abstand eingehalten werden, beispielsweise damit die warme Luft eines Heizkörpers ungehindert zirkulieren kann, werden allgemein aus Stahlblech hergestellte Konsolen verwendet. Diese Konsolen sind üblicherweise zweiteilig. Beide Konsolenteile sind gegeneinander teleskopierbar, so dass der Abstand zwischen Wand und Kanal individuell angepasst werden kann.

Will der Elektroinstallateur einen solchen Leitungsführungskanal verlegen, so zeichnet er zuerst mit Hilfe von Wasserwaage und Meterstab die Positionen der Konsolen an. Nachdem er diese mit Dübel und Schrauben befestigt hat, zeichnet er am Boden des Leitungsführungskanals die Stellen an, wo er seine Befestigungsbohrungen anbringen muss. Nachdem er die Befestigungsbohrungen hergestellt hat, kann er die Kanäle an den kanalseitigen Konsolenteilen anschrauben. Die kanalseitigen Konsolenteile besitzen zu diesem Zweck zwei Muttern, die hinter einem oberen und einem unteren Langloch so befestigt sind, dass sie seitlich verschoben werden können. Dank dieser Verschiebbarkeit kann der Installateur die Kanalabschnitte fein justieren.

Es versteht sich, dass das Herstellen der Befestigungsbohrungen im Kanalboden eine zeitaufwendige Tätigkeit ist. Auch kommt es immer wieder zu Fehlbohrungen. Zum endgültigen Befestigen der Kanäle an den Konsolen sind zwei Installateure erforderlich, da der eine die Kanäle halten muss, während der andere die Muttern ausrichtet und die Schrauben eindreht.

Die vorliegende Erfindung hat sich die Aufgabe gestellt hier Abhilfe zu schaffen. Insbesondere soll der Arbeits- und Zeitaufwand zum Befestigen der Kanäle an den Konsolen erheblich reduziert werden.

Diese Aufgabe wird gelöst durch Konsolen mit den Merkmalen des Anspruchs 1.

Die vorliegende Erfindung geht davon aus, dass die Kanäle mit exakt positionierten, regelmäßig angeordneten Bodenlochungen versehen sind. Solche Bodenlochungen lassen sich werksseitig viel einfacher, schneller und preiswerter herstellen als es bei der handwerklichen Einzelanfertigung auf der Baustelle möglich ist Die erfindungsgemäßen Konsolen besitzen auch die Langlöcher, die es dem Installateur erlauben, die Kanäle zunächst nur vorläufig an den Konsolen zu befestigen, sie dann seitlich zu justieren und sie erst dann endgültig zu fixieren. Dank der Verwendung von Halteteilen mit Haken, die zu der Bodenlochung der Kanäle passen, lassen sich die Kanäle von einem einzigen Mann sehr einfach vorläufig fixieren. Die endgültige Fixierung der Kanäle an den Konsolen erfolgt durch die Halteteile im Bereich des unteren Langlochs, wobei hier die an sich bekannten Schraubverbindungen ohne weiteres verwendbar sind.

Gemäß einer Ausgestaltung der Erfindung ist das obere Halteteil ein U-förmiges Stanz-Biege-Teil, hergestellt aus Blech. Die Tragkraft des oberen Halteteils bzw. des an ihm angeformten Hakens kann in einfacher Weise durch Stärke und Härte des Blechmaterials an die jeweiligen Bedürfnisse angepasst werden. Die Herstellung derartiger Stanz-Biege-Teile ist eine bewährte Technik.

Vorzugsweise besitzt das obere Halteteil eine in das obere Langloch einrastende Nase. Dank dieser Nase sitzt das obere Halteteil unverlierbar am kanalseitigen Konsolenteil.

Vorteilhafterweise besitzt das obere Halteteil angeformte Federn, die sich gegen den Boden des Leitungsführungskanals abstützen. Dank dieser Federn hängen Kanäle mit dünner Wandstärke, beispielsweise Stahlblechkanäle, genauso sicher und ortsfest auf dem Haken wie Leitungsführungskanäle mit großer Wandstärke, beispielsweise Kunststoffkanäle.

Für das dem unteren Langloch zugeordnete Halteteil gibt es mehrere alternative Ausführungsformen.

Eine erste Ausführungsform ist eine Mutter, hergestellt als U-förmiges Stanz-Biege-Teil, vergleichbar dem oberen Halteteil.

Eine alternative Ausführungsform besteht aus einem Halteklotz mit zentraler Bohrung, in die eine Befestigungsschraube eingeschraubt wird.
In allen Fällen ist das untere Halteteil in das untere Langloch eingeclipst und kann in diesem seitlich verschoben werden, bis es mit der Bodenlochung des Kanals fluchtet.

Anhand der Zeichnung soll die Erfindung in Form eines Ausführungsbeispiels näher erläutert werden. Es zeigen
Fig. 1 eine Wandkonsole mit daran befestigtem Kanalunterteil als Seitenansicht,
Fig. 2 eine Draufsicht auf die Konsole und den aufgebrochenen Kanal der Fig.1 und
Fig. 3. eine perspektivische Ansicht eines oberen Halteteils.

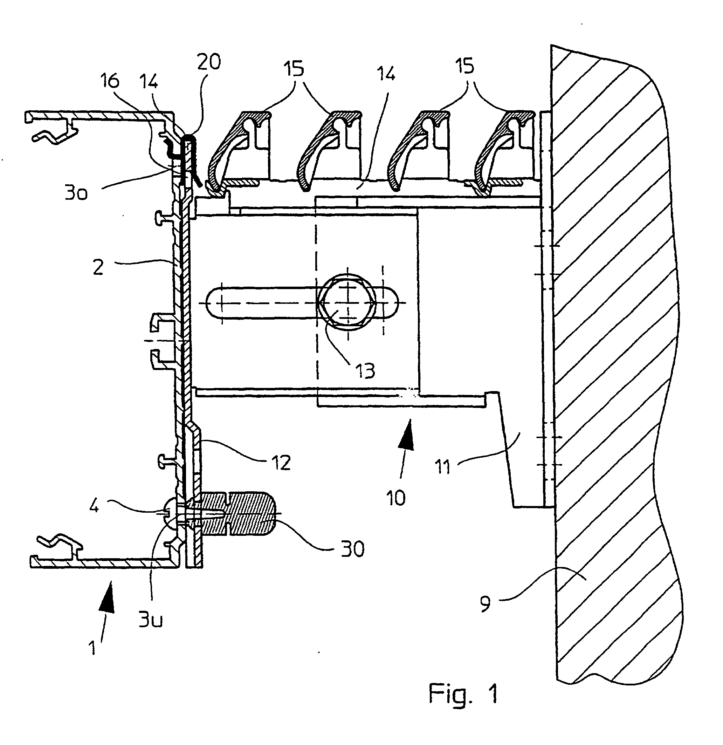

Fig. 1 zeigt als Seitenansicht eine an einer Wand 9 befestigte zweiteilige Konsole 10. Man erkennt ein wandseitiges Konsolenteil 11 und ein kanalseitiges Konsolenteil 12. Beide Konsolenteile 11,12 sind gegeneinander teleskopierbar und mit Hilfe einer Schraube 13 fixierbar.

Auf der Oberseite der Konsole 10 erkennt man einen aufgesetzten Lamellenhalter 14 mit vier Lamellen 15. Zwischen den Lamellen 15 kann die warme Luft eines an der Wand 9 befestigten Heizkörpers (nicht dargestellt) zirkulieren.

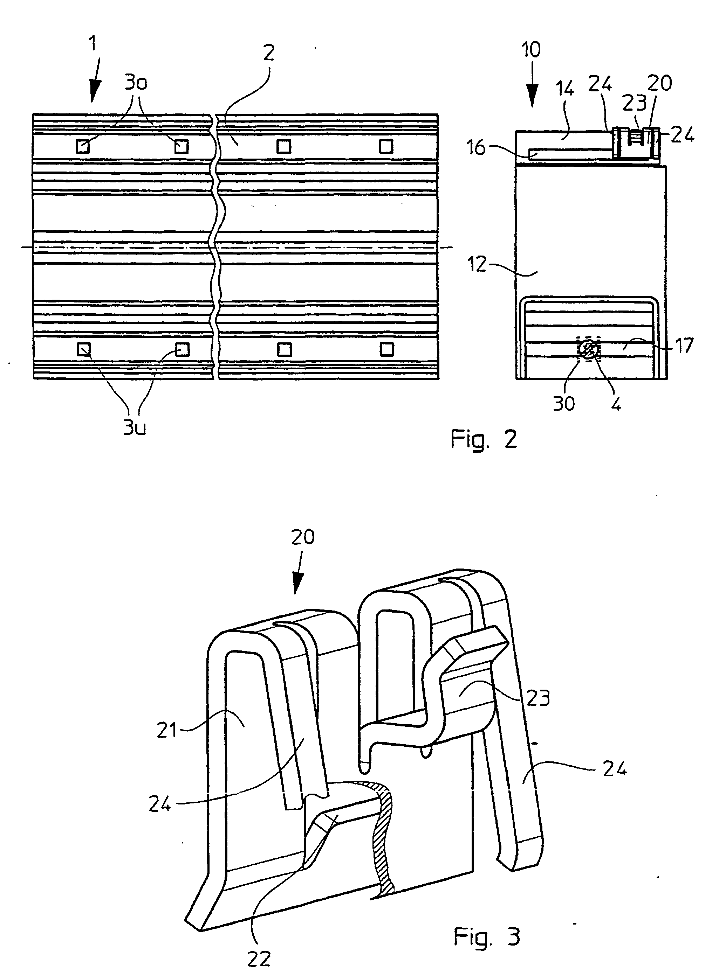

An dem kanalseitigen Konsolenteil 12 ist das Unterteil eines Leitungsführungskanals 1 befestigt. Das Kanalunterteil 1 besitzt zu diesem Zweck eine obere und eine untere Bodenlochung 3o, 3u, die insbesondere in Fig. 2 gut zu erkennen ist. Diese Bodenlochung 3o, 3u wurde werksseitig mit hoher Genauigkeit angebracht. Der Querschnitt der Bodenlochungen 3o, 3u ist vorzugsweise quadratisch oder rechteckig.

Wie die Fig. 1 und 2 erkennen lassen besitzt das kanalseitige Konsolenteil 12 eine nach oben hochstehende Leiste 14, in die ein oberes Langloch 16 eingearbeitet ist. Ein weiteres Langloch 17 befindet sich im unteren Bereich des kanalseitigen Konsolenteils 12. Der gegenseitige Abstand von oberem und unterem Langloch 16,17 entspricht dem gegenseitigen Abstand von oberer und unterer Bodenlochung 3o, 3u.

Auf die obere Leiste 14 aufgesetzt erkennt man ein oberes Halteteil 20. Dabei handelt es sich um ein aus Blech hergestelltes Stanz-Biege-Teil 21 mit U-förmigem Querschnitt, wie es in Fig. 3 dargestellt ist. An der dem Kanal 1 zugewandten Vorderseite des Halteteils 20 ist ein Haken 23 angeformt, der mit der Bodenlochung 3o korrespondiert. An dem rückseitigen Schenkel des Halteteils 20 ist eine Haltenase 22 angeformt, die in das obere Langloch 16 einrastet. Dadurch kann das obere Halteteil 20 auf dem kanalseitigen Konsolenteil 12 seitlich verschoben werden ohne herunterzufallen.

Rechts und links vom Haken 23 erkennt man angeformte Blattfedern 24. Diese legen sich gegen die Rückseite des Kanalbodens 2, so dass auch Kanäle mit geringer Wandstärke, beispielsweise Stahlblechkanäle, genauso sicher und definiert auf dem Haken 23 sitzen wie Kanäle mit dicker Wandstärke, beispielsweise Kunststoffkanäle.

Dem unteren Langloch 17 ist ein unteres Halteteil 30 zugeordnet. Dabei handelt es sich um einen Halteklotz mit zentraler Bohrung, in die eine Schraube 4 eingedreht ist Der Halteklotz 30 ist in das untere Langloch 17 eingeclipst und kann seitlich verschoben werden, ohne sich zu lösen.

Die erfindungsgemäße Konsole 10 erleichtert dem Elektroinstallateur die Kanalmontage ganz entscheidend. Dank der werksseitig angebrachten Bodenlochung 3o, 3u kann er das Kanalunterteil 1 zunächst auf die Haken 23 des oberen Halteteils 20 hängen. Dazu benötigt er keine Hilfe. Anschließend kann er die Kanäle seitlich justieren. Sobald dies geschehen ist muss er nur noch die unteren Halteteile 30 seitlich so weit verschieben, dass sie mit der unteren Bodenlochung 3u fluchten. Nach Eindrehen der Halteschrauben 4 ist die Kanalmontage erledigt.

## Patentansprüche

1. Konsole (10) zur Befestigung von Leitungsführungskanälen (1) an Wänden (9), im wesentlichen umfassend
- ein wandseitiges Konsolenteil (11)
- und ein kanalseitiges Konsolenteil (12) mit
-- einem oberen und einem unteren Langloch (16,17)
-- und den Langlöchem (16,17) zugeordneten, seitlich verschiebbaren Halteteilen (20,30),
**gekennzeichnet durch** die Merkmale:
- das kanalseitige Konsolenteil (12) besitzt eine hochstehende Leiste (14),
- in die Leiste (14) ist das obere Langloch (16) eingearbeitet,
- das dem oberen Langloch (16) zugeordnete Halteteil (20) besitzt einen Haken (23),
- der Haken (23) korrespondiert mit einer Lochung (3o) im Boden (2) des Leitungsführungskanals (1).

2. Konsole nach Anspruch 1, **gekennzeichnet durch** das Merkmal:
- das obere Halteteil (20) ist ein U-förmiges Stanz-Biege-Teil (21), hergestellt aus Blech.

3. Konsole nach Anspruch 1 oder 2, **gekennzeichnet durch** das Merkmal:
- das obere Halteteil (20) besitzt eine in das obere Langloch (16) einrastende Nase (22).

4. Konsole nach einem der Ansprüche 1 bis 3, **gekennzeichnet durch** das Merkmal:
- das obere Halteteil (20) besitzt angeformte Federn (24), die sich gegen den Boden (2) des Leitungsführungskanals (1) abstützen.

5. Konsole nach einem der Ansprüche 1 bis 4, **gekennzeichnet durch** das Merkmal:
- das dem unteren Langloch (17) zugeordnete Halteteil ist eine Mutter, hergestellt aus Blech als U-förmiges Stanz-Biege-Teil.

6. Konsole nach einem der Ansprüche 1 bis 4, **gekennzeichnet durch** das Merkmal:
- das dem unteren Langloch (17) zugeordnete Halteteil (30) ist ein Schraubklotz.

7. Konsole nach Anspruch 5 oder 6, **gekennzeichnet durch** das Merkmal:
- das untere Halteteil (30) ist in das untere Langloch (17) eingeclipst

## Claims

1. Bracket (10) for fixing wiring trunking (1) to walls (9), essentially comprising
- a bracket part (11) on the wall side
- and a bracket part (12) on the trunking side with
- an upper and a lower elongate hole (16, 17)
- and laterally displaceable retaining parts (20, 30) associated with the elongate holes (16, 17),
**characterised by** the features:
- the bracket part (12) on the trunking side has an upright strip (14),
- the upper elongate hole (16) is worked into the strip (14),
- the retaining part (20) which is associated with the upper elongate hole (16) has a hook (23),
- the hook (23) corresponds to perforations (30) in the bottom (2) of the wiring trunking (1).

2. Bracket according to Claim 1, **characterised by** the feature:
- the upper retaining part (20) is a U-shaped punched-bent part (21) which is made of metal sheet.

3. Bracket according to Claim 1 or 2, **characterised by** the feature:
- the upper retaining part (20) has a lug (22) which locks into the upper elongate hole (16).

4. Bracket according to any one of Claims 1 to 3, **characterised by** the feature:
- the upper retaining part (20) has moulded-on springs (24) which are supported against the bottom (2) of the wiring trunking (1).

5. Bracket according to any one of Claims 1 to 4, **characterised by** the feature:
- the retaining part which is associated with the lower elongate hole (17) is a nut which is made of metal sheet as a U-shaped punched-bent part.

6. Bracket according to any one of Claims 1 to 4, **characterised by** the feature:
- the retaining part (30) which is associated with the lower elongate hole (17) is a threaded block.

7. Bracket according to Claim 5 or 6, **characterised by** the feature:
- the lower retaining part (30) is clipped into the lower elongate hole (17).

## Revendications

1. Console (10) pour la fixation de goulottes d'installation électrique (1) sur des murs (9), comprenant pour l'essentiel
- une partie console côté mur (11)
- et une partie console côté goulotte (12) avec
- un trou oblong supérieur et un trou oblong inférieur (16, 17)
- et des pièces de retenue (20, 30) déplaçables latéralement, associées aux trous oblongs (16, 17),
**caractérisée par le fait que**
- la partie console côté goulotte (12) possède une moulure surélevée ou un rebord relevé (14),
- le trou oblong supérieur (16) est ménagé dans la moulure ou le rebord (14),
- la pièce de retenue (20) associée au trou oblong supérieur (16) possède un crochet (23),
- le crochet (23) correspond à un perçage (3o) dans le fond (2) de la goulotte d'installation électrique (1).

2. Console selon la revendication 1, **caractérisée par le fait que**
- la pièce de retenue supérieure (20) est une pièce pliée et découpée en forme de U (21) réalisée en tôle.

3. Console selon la revendication 1 ou 2, **caractérisé par le fait que**
- la pièce de retenue supérieure (20) possède un ergot (22) qui s'engage dans le trou oblong supérieur (16).

4. Console selon l'une des revendications 1 à 3, **caractérisé par le fait que**
- la pièce de retenue supérieure (20) possède des ressorts formés (24) qui s'appuient contre le fond (2) de la goulotte d'installation électrique (1).

5. Console selon l'une des revendications 1 à 4, **caractérisé par le fait que**
- la pièce de retenue associée au trou oblong inférieur (17) est un écrou réalisé en tôle sous la forme d'une pièce pliée et découpée en forme de U.

6. Console selon l'une des revendications 1 à 4, **caractérisé par le fait que**
- la pièce de retenue (30) associée au trou oblong inférieur (17) est un plot à vis.

7. Console selon la revendication 5 ou 6, **caractérisé par le fait que**
- la pièce de retenue (30) est clipsée dans le trou oblong inférieur (17).
